# EUROPÄISCHE PATENTSCHRIFT

(11) **EP 1 259 032 B1**
(45) Veröffentlichungstag und Bekanntmachung des Hinweises auf die Patenterteilung: **22.07.2009**
(21) Anmeldenummer: 02010930.2
(22) Anmeldetag: 16.05.2002
(51) Int. Cl.: H04L 12/413

(54) **System zur Steuerung von elektrisch ansteuerbaren Komponenten, entsprechende Zentralsteuereinheit und entsprechendes Modul**
System for controlling of electrically controlled components, central control unit therefor and corresponding module
Dispositif de commande de composants électriques commandables, centrale de commande correspondante et module associé

(30) Priorität: 16.05.2001 DE 10123842
(43) Veröffentlichungstag der Anmeldung: 20.11.2002
(73) Patentinhaber: ROBERT BOSCH GMBH, 70442 Stuttgart (DE)
(72) Erfinder: Kramp, Wolfgang, 71254 Ditzingen (DE); Wagner, Arndt, 71735 Eberdingen (DE); Spichale, Thomas, 69436 Schoenbrunn (DE)

(56) Entgegenhaltungen:
- DE-A1- 19 750 662
- GB-A- 2 351 588
- US-A- 5 339 362
- US-A- 5 581 130
- US-A- 6 093 977
- US-A1- 2002 140 289

## Beschreibung

### STAND DER TECHNIK

Die vorliegende Erfindung betrifft ein System zur Steuerung von elektrisch ansteuerbaren Komponenten mit einer Zentralsteuereinheit sowie eine entsprechende Zentralsteuereinheit und ein entsprechendes Modul. Ein derartiges System ist aus der DE 199 39 631 A gemäß Oberbegriff des Anspruchs 1 bekannt.

Obwohl auf beliebige Systeme mit elektrisch ansteuerbaren Komponenten anwendbar, werden die vorliegende Erfindung sowie die ihr zugrundeliegende Problematik in bezug auf ein an Bord eines Kraftfahrzeuges befindliches System erläutert.

Allgemein werden Kraftfahrzeuge aus Komfortgründen, aber auch aus Sicherheitsgründen zunehmend mit einer Mehrzahl von elektrisch ansteuerbaren Kraftfahrzeugkomponenten ausgestattet. Insbesondere im Infotainment- und Multimediabereich erfolgt die Ausstattung des Kraftfahrzeuges kundenorientiert gemäß den persönlichen Bedürfnissen und Wünschen des entsprechenden Kunden. Dabei soll es dem Benutzer des Kraftfahrzeuges offenbleiben, nach erfolgter Auslieferung des Fahrzeuges dieses auf seine speziellen Bedürfnisse und Wünsche weiter abzustimmen und aufzurüsten.

Für eine derartige attraktive Ausgestaltung des Systems weisen integrierte Cockpitsysteme nach dem Stand der Technik ein zentrales Cockpit-Elektronikmodul bzw. eine Zentralsteuereinheit auf, das bzw. die als einteiliges Bauelement ausgebildet ist und sämtliche in Frage kommenden Funktionalitäten beinhaltet.

Dies ist verständlicherweise mit einem hohen Fertigungsaufwand und hohen Fertigungskosten verbunden.

Ebenfalls bekannt nach dem Stand der Technik sind Systeme, die lediglich für ein Kleinwagensegment ausgelegt sind und lediglich vorbestimmte Funktionalitäten unterstützen. Eine vom Kunden erwünschte Umrüstung mit Multimediakomponenten ist bei diesen Systemen mit einem hohen Kostenaufwand verbunden und daher unökonomisch.

Die der vorliegenden Erfindung zugrunde liegende Problematik besteht also allgemein darin, ein System zur Steuerung von elektrisch ansteuerbaren Komponenten zu schaffen, mit de sich unter Einsatz geringer Kosten und eines geringen Umrüstungsaufwands eine Variantenvielfalt anbieten lässt, die von einer einfachen Grundausstattung bis hin zu einem High-End-Multimediasystem reicht.

Aus der US 6,093,977 ist eine Elektronikvorrichtung und ein Montageverfahren für ein Fahrzeug bekannt, bei dem ein zentrales Steuerungs- und Bedienelement in einer Gehäuseabdeckung angeordnet ist, während verschiedene zu steuernde Komponenten mit dem Bedienelement verbunden und hinter dem Bedienelement angeordnet sind.

### Vorteile der Erfindung

Das erfindungsgemäße System mit den Merkmalen des Anspruchs 1 bzw. die Zentralsteuereinheit nach Anspruch 11 bzw. das Modul nach Anspruch 16 weisen gegenüber den bekannten Lösungsansätzen den Vorteil auf, dass in ein bestehendes Grundsystem benutzerdefinierte Zusatzkomponenten, wie Infotainmentmodul oder Multimediamodul, auf einfache Weise unter Einsatz geringer Kosten integrierbar sind. Dadurch können auch bereits fertig gestellte Kraftfahrzeuge durch zusätzlich eingebaute bzw. ausgetauschte Ausstattungselemente mit einem geringen Kostenaufwand ergänzt bzw. umgerüstet werden.

Die der vorliegenden Erfindung zugrunde liegende Idee besteht darin, dass das System zur Steuerung der elektrisch ansteuerbaren Komponenten eine Zentralsteuereinheit aufweist, in der mindestens ein erstes Modul zur Steuerung von Kraftfahrzeugkomponenten fest integriert ist und in das mindestens ein zweites Modul aufnehmbar ist, wobei das zweite Modul zur Steuerung von Infotainmentkomponenten oder zur Steuerung von Multimedia-Komponenten ausgebildet ist.

Dadurch erfolgt eine Variantengenerierung erst am Ende der Wertschöpfungskette, und den individuellen Wünschen eines Kunden kann unter Einsatz geringer Kosten Rechnung getragen werden. So ist beispielsweise das System bis zu einem Mehrplatz-Multimediasystem ausbaubar. Zusätzlich wird ein einheitliches Konzept für alle Fahrzeugklassen geschaffen, wodurch der Herstellungsaufwand verringert wird.

Erfindungsgemäß ist das Multimediamodul als Firewall/Gateway-Modul ausgebildet. Dies verhindert einen Einfluss der Multimediawelt auf sicherheitsrelevante Fahrzeugdaten und - einrichtungen.

Erfindungsgemäß stellt das Multimediamodul mittels eines Multimediabusses eine Verbindung der Multimediakomponenten mit dem ersten Modul her. Somit erfolgt eine Anbindung der Multimediakomponenten an das Grundmodul der Zentralsteuereinheit.

In den jeweiligen Unteransprüchen finden sich vorteilhafte Weiterbildungen und Verbesserungen des betreffenden Gegenstandes der Erfindung.

Gemäß einer bevorzugten Weiterbildung weist die Zentralsteuereinheit eine mechanisch und elektrisch einheitliche Schnittstelle auf, bezüglich der jedes zweite Modul, das heißt sowohl das Infotainmentmodul als auch das Multimediamodul, kompatibel ausgebildet ist. Dadurch ist eine einfache Umrüstung ohne mechanische oder elektrische Zusatzbauteile möglich.

Gemäß einer weiteren bevorzugten Weiterbildung ist das Gehäuse der Zentralsteuereinheit mit einer Aufnahmeeinrichtung für eine Aufnahme des zweiten Moduls ausgebildet. Somit erfolgt eine Aufrüstung lediglich durch ein Einsetzen des neuen Moduls in die entsprechend vorgesehene Aufnahmeeinrichtung.

Gemäß einer weiteren bevorzugten Weiterbildung sind die Komponenten des Infotainmentmoduls als eigenständige Komponenten des Multimediamoduls am Multimediabus angeschlossen. Somit kann bei einer Umrüstung des Systems zu einem Mehrplatz-Multimediasystem der Infotainmentbereich in das Multimediamodul integriert werden. Somit ist lediglich ein zusätzliches zweites Moduls für alle relevanten Funktionalitäten notwendig.

Gemäß einer weiteren bevorzugten Weiterbildung weist das Infotainmentmodul eine Autoradiofunktionalität auf und ist für eine Anbindung von Audiokomponenten, beispielsweise eines CDPlayers, CD-Wechslers, MD-Players, DVD-Players oder dergleichen vorgesehen. Dadurch kann der Kraftfahrzeugbenutzer individuell seine Komponenten auswählen und an das Infotainmentmodul anschließen.

Gemäß einer weiteren bevorzugten Weiterbildung sind die Multimediakomponenten als Mobiltelefon, Navigationssystem, Internet-Anbindung, Autoradio oder dergleichen ausgebildet. Für den Fall, dass das zweite Modul als Multimediamodul ausgebildet ist, sind die Infotainmentkomponenten als eigenständige Komponenten am Multimediabus angeschlossen.

Gemäß einer weiteren bevorzugten Weiterbildung ist das erste Modul in der Zentralsteuereinheit auf einer selbständigen Leiterplatte angeordnet. Somit besteht die Zentralsteuereinheit aus einer Zwei-Platinen-Anordnung, einer ersten Platine 35 für das erste Modul und einer zweiten Platine für das zweite Modul. Folglich muss die Grundausstattung nicht von Beginn an sämtlich vorstellbare Funktionalitäten aufweisen, sondern lediglich die standardmäßig vorgesehenen. Dadurch lassen sich sowohl die Herstellungskosten als auch der Einbaustauraum verringern.

Gemäß einer weiteren bevorzugten Weiterbildung sind die Fahrzeugkomponenten als Kombiinstrument; Bedienelemente; Anzeigeeinrichtungen; Insassenschutzanwendungen, wie beispielsweise Airbag, ABS-System, Überrollbügel oder dergleichen; und/oder als Steuereinrichtungen, wie beispielsweise Türverschluß, Kofferraumverschluß, Tankverschluß, Handschuhfachverschluß, Fensterheber, Außenspiegelverstellung, Sitzverstellung, Diebstahlwarnanlage, Heckscheibenheizung, Innenraumleuchte, Kofferraumleuchte oder dergleichen ausgebildet und mittels entsprechender Busse an das erste Modul in der Zentralsteuereinheit angeschlossen.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung der Zentralsteuereinheit gemäss einem Ausführungsbeispiel der vorliegenden Erfindung;
- Fig. 2: eine schematische Darstellung des Steuersystems mit angeschlossenem Infotainmentmodul; und
- Fig. 3: eine schematische Darstellung des Steuersystems mit angeschlossenem Multimediamodul.

### BESCHREIBUNG DER AUSFÜHRUNGSBEISPIELE

In den Figuren bezeichnen gleiche Bezugszeichen gleiche oder funktionsgleiche Komponenten.

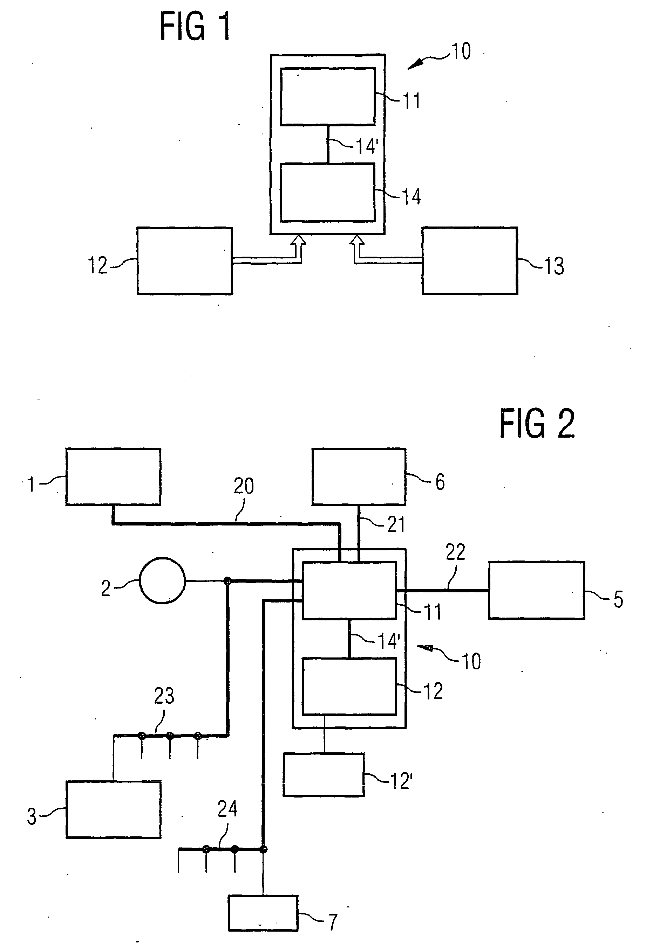

Fig. 1 illustriert eine schematische Darstellung einer Zentralsteuereinheit 10 gemäss einem Ausführungsbeispiel der vorliegenden Erfindung, in die ein erstes Modul 11 vorteilhaft auf einer eigenen Leiterplatte integriert ist. Zusätzlich weist die Zentralsteuereinheit 10 eine Aufnahmeeinrichtung 14 zum Aufnehmen eines zweiten Moduls 12 (Infotainmentmodul 12) oder eines zweiten Moduls 13(Multimediamodul 13) auf. Die zweiten Module 12, 13 sind mechanisch kompatibel zur Aufnahmeeinrichtung 14 ausgebildet und kommunizieren über eine mechanisch und elektrisch einheitliche Schnittstelle 14' mit dem ersten Modul 11 der Zentralsteuereinheit 10. Dabei handelt es sich vorteilhaft um eine interne Schnittstelle 14', die im ersten Modul integriert ist.

Fig. 2 zeigt eine schematische Darstellung des Steuersystems, wobei das zweite Modul als Infotainmentmodul 12 ausgebildet und in die Zentralsteuereinheit 10 eingesetzt ist. Wie oben bereits erläutert, ist das Infotainmentmodul 12 über die einheitliche Schnittstelle 14' mit dem ersten Modul 11 für eine Kommunikation ausgebildet. Beispielsweise ist die Schnittstelle 14' als interne SPI-Schnittstelle vorgesehen.

Einzelne Kraftfahrzeugkomponenten 1, 2, 3, 5, 6, 7 kommunizieren über entsprechende Bussysteme 20, 21, 22, 23, 24 mit dem als Fahrzeugfunktionsmodul 11 ausgebildeten ersten Modul 11.

Beispielsweise ist die Fahrzeugkomponente 1 als Kombiinstrument ausgebildet und über einen LS-CAN-BUS 20 mit dem Fahrzeugfunktionsmodul 11 für eine Ansteuerung des Kombiinstrumentes 11 durch die Zentralsteuereinheit 10 verbunden. Weitere Fahrzeugkomponenten, beispielsweise Bedienelemente wie Lenkrad 2, oder Steuereinrichtungen wie Türverschluss, Kofferraumverschluss, Tankdeckelverschluss, Handschuhfachverschluss, Fensterheber, Außenspiegelverstellung, Sitzverstellung, Diebstahlwarnanlage, Heckscheibenheizung, Kofferraumbeleuchtung, Innenraumbeleuchtung oder dergleichen, sind über ebenfalls einen LS-CAN-BUS 23 mit dem Fahrzeugfunktionsmodul 11 für eine Ansteuerung verbunden. Insassenschutzanwendungen 7 sind vorteilhaft für eine schnelle Auslösung über einen HS-CAN-BUS 24 an das Fahrzeugfunktionsmodul 11 angeschlossen.

Bei dem CAN-BUS handelt es sich um einen Multimaster-Kommunikationssteuerbus mit einer Hochgeschwindigkeitsübertragung für diverse Hochleistungskommunikationssysteme. Jedoch sind auch andere Verbindungssysteme vorstellbar.

Beispielsweise ist eine Anzeigeneinrichtung 6 mittels einer ASCI-Verbindung oder Bedienelemente, wie beispielsweise ein Bedienpaneel 5, über eine BSS- oder eine LIN-Verbindung an das Fahrzeugfunktionsmodul 11 angeschlossen.

Dadurch entsteht ein Steuersystem zur Steuerung von elektrisch ansteuerbaren Fahrzeugkomponenten 1, 2, 3, 5, 6, 7, die über verschiedene BUS-Systeme mit der Zentralsteuereinheit 10 für eine Ansteuerung kommunizieren.

Die Zentralsteuereinheit 10 ist in zwei Blöcke unterteilt, wobei der erste Block aus dem Fahrzeugfunktionsmodul 11 und der zweite Block aus dem zweiten Modul, gemäß Fig. 2 dem Infotainmentmodul 12, gebildet ist.

Das Infotainmentmodul 12 ist auf oben beschriebene Weise mit dem Fahrzeugfunktionsmodul 11 verbunden und besitzt eine Autoradiofunktionalität. Es können bestimmte Audiokomponenten 12', wie beispielsweise ein CD-Player, CD-Wechsler, MD-Player, DVD-Player oder dergleichen mit dem Infotainmentmodul verbunden sein.

Somit steuert die Zentralsteuereinheit 10 sowohl mittels dem Fahrzeugfunktionsmodul 11 die Fahrzeugkomponenten 1, 2, 3, 5, 6, 7 als auch mittels dem Infotainmentmodul 12 ausgewählte Audiokomponenten 12', wobei das System, wie oben beschrieben, aus zwei getrennten Modulen 11 und 12 gebildet ist.

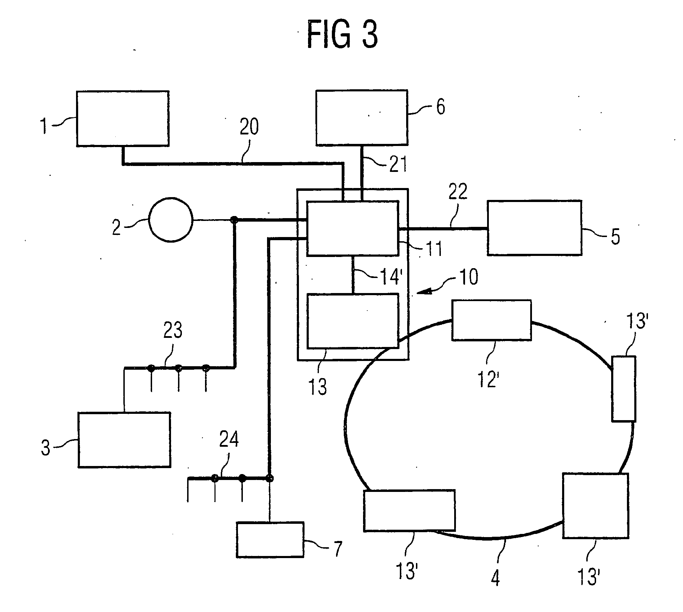

In Fig. 3 ist eine schematische Darstellung des Steuersystems ersichtlich, in dem das zweite Modul als Multimediamodul 13 ausgebildet ist. Die hier nicht detaillierter beschriebenen Komponenten und deren Funktionsweisen verhalten sich analog zu denen des ersten Ausführungsbeispiels in Fig. 2, und eine detaillierte Erläuterung erübrigt sich daher.

Im Unterschied zum zweiten Ausführungsbeispiel in Fig. 2 ist das zweite Modul 13, wie in Fig. 3 dargestellt, als Multimediamodul 13 ausgebildet und ebenfalls über die einheitliche Schnittstelle 14' mit dem Fahrzeugfunktionsmodul 11 der Zentralsteuereinheit 10 verbunden und in die Aufnahmeeinrichtung 14 eingesetzt.

Das Multimediamodul 13 ist vorteilhaft als Firewall/Gateway-Modul 13 ausgebildet, das bei Einsatz eines Multimediabusses 4 das Verbindungsglied zwischen den am Multimediabus 4 angeschlossenen Multimediakomponenten 13' und dem Fahrzeugfunktionsmodul 11 darstellt. Dies beinhaltet auch einen Datenaustausch mit den am Fahrzeugfunktionsmodul 11 angeschlossenen Fahrzeugkomponenten 1, 2, 3, 5, 6, 7, soweit erwünscht oder erforderlich.

Durch Ausgestaltung des Multimediamoduls 13 mit einem Firewall wird gewährleistet, daß die angeschlossene Multimediaweit keinen Einfluß auf sicherheitsrelevante Fahrzeugdaten oder Fahrzeugeinrichtungen hat und es somit nicht unerwünschterweise zu einem externen Auslösen beispielsweise des Airbags oder anderer Fahrzeugkomponenten kommt.

In der weiten Modulvariante gemäß Fig. 3 enthält die Zentralsteuereinheit 10 keine Autoradiofunktionalität, jedoch können Audiokomponenten 12' als eigenständige Bauteile am Multimediabus 4 angeschlossen sein.

Weitere Multimediakomponenten 13', die am Multimediabus 4 angeschlossen sind, sind beispielsweise ein Mobiltelefon, ein Navigationssystem, eine Internet-Anbindung oder dergleichen.

Die vorliegende Erfindung schafft ein Steuersystem, bei dem eine Variantengenerierung erst am Ende der Wertschöpfungskette erfolgt. Somit kann ein einheitliches, einfach ausgestattetes Grundsystem für alle Fahrzeugklassen kundenorientiert umgerüstet werden.

Ferner erfolgt gegenüber den herkömmlichen Systemen sowohl eine Kosten- als auch eine Bauraumreduktion, eine Trennung von Funktion und Design und eine einheitliche Mensch-Maschine-Schnittstelle. Das erfindungsgemäße System bietet eine Variantenvielfalt, die von einer einfachen Grundausstattung bis hin zum High-End-Multimediasystem reicht.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere sind die dargestellten Fahrzeugkomponenten, Infotainmentkomponenten und Multimediakomponenten lediglich beispielhaft und keinesfalls abschließend zu verstehen.

Außerdem können auch andere BUS-Systeme bei einer Anbindung der einzelnen Komponenten verwendet werden.

Zudem sind in die Aufnahmeeinrichtung 14 auch andere Module über die einheitliche Schnittstelle 14' einsetzbar und in die Zentralsteuereinheit 10 integrierbar.

## Patentansprüche

1. System zur Steuerung von elektrisch ansteuerbaren Komponenten (1, 2, 3, 5, 6, 7; 121; 131) in einem Kraftfahrzeug, mit einer Zentralsteuereinheit (10), in der mindestens ein erstes Modul (11) zur Ansteuerung von Kraftfahrzeugkomponenten (1, 2, 3, 5, 6, 7) fest integriert ist und in das mindestens ein zweites Modul (12; 13) aufnehmbar ist, wobei das zweite Modul (12; 13) zur Steuerung von Infotainmentkomponenten (12') und/oder zur Steuerung von Multimediakomponenten (13') ausgebildet ist. **dadurch gekennzeichnet, dass** das zweite Modul (13) als Multimediamodul (13) mit Firewall/Gateway-Funktion ausgebildet ist und dass das zweite Modul (13) mittels eines Multimediabusses (4) eine Verbindung der Multimediakomponenten (13') mit dem ersten Modul (11) herstellt.

2. System nach Anspruch 1, **dadurch gekennzeichnet, dass** die Zentralsteuereinheit (10) eine mechanisch und elektrisch einheitliche Schnittstelle aufweist, bezüglich der jedes zweite Modul (12; 13) kompatibel ausgebildet ist.

3. System nach einem der Ansprüche 1 oder 2, **dadurch gekennzeichnet, dass** das Gehäuse der Zentralsteuereinheit (10) mit einer Aufnahmeeinrichtung (14) zum Aufnehmen des zweiten Moduls (12; 13) ausgebildet ist.

4. System nach einem der vorhergehenden Ansprüche, **dadurch gekennzeichnet, dass** die Komponenten (12') des Infotainmentmoduls (12) als eigenständige Komponenten (13') des Multimediamoduls (13) am Multimediabus (4) anschließbar sind.

5. System nach einem der vorhergehenden Ansprüche, **dadurch gekennzeichnet, dass** das Infotainmentmodul (12) eine Autoradiofunktionalität aufweist und für eine Anbindung von Audiokomponenten (12'), beispielsweise eines CD-Players, CD-Wechsler, MD-Players, DVD-Players oder dergleichen vorgesehen ist.

6. System nach einem der vorhergehenden Ansprüche, **dadurch gekennzeichnet, dass** die Multimediakomponenten (13') als Mobiltelefon, Navigationssystem, Internet-Anbindung, Autoradio oder dergleichen ausgebildet sind.

7. System nach einem der vorhergehenden Ansprüche, **dadurch gekennzeichnet, dass** das erste Modul (11) in der Zentralsteuereinheit (10) auf einer selbständigen Leiterplatte angeordnet ist.

8. System nach einem der vorhergehenden Ansprüche, **dadurch gekennzeichnet, dass** die Fahrzeugkomponenten (1, 2, 3, 5, 6, 7) als Kombiinstrument (1) ; Bedienelemente (2, 5); Anzeigeeinrichtungen (6); Insassenschutzanwendungen (7), wie beispielsweise Airbag, ABS-System, Oberrollbügel oder dergleichen; und/oder als Steuereinrichtungen (3), wie beispielsweise Türverschluss, Kofferraumverschluss, Tankdeckelverschluss, Handschuhfachverschluss, Fensterheber, Außenspiegelverstellung, Sitzverstellung, Diebstahlwarnanlage, Heckscheibenheizung, Kofferraumbeleuchtung, Innenraumbeleuchtung oder dergleichen ausgebildet sind und mittels entsprechender Busse (20, 21, 22, 23, 24) an das erste Modul (11) in der Zentralsteuereinheit (10) anschließbar sind.

9. Zentralsteuereinheit (10), für ein System zur Steuerung von elektrisch ansteuerbaren Komponenten (1, 2, 3, 5, 6, 7; 12'; 13') in einem Kraftfahrzeug, in der mindestens ein erstes Modul (11) zur Ansteuerung von Kraftfahrzeugkomponenten (1, 2, 3, 5, 6, 7) fest integriert ist und in das mindestens ein zweites Modul (12; 13) aufnehmbar ist, wobei das zweite Modul (12; 13) zur Steuerung von Infotainmentkomponenten (12') oder zur Steuerung von Multimediakomponenten (13') ausgebildet ist, **dadurch gekennzeichnet dass** das zweite Modul (13) als Multimediamodul (13) mit Firewall/Gateway-Funktion ausgebildet ist mittels eines Multimediabusses (4) eine Verbindung der Multimediakomponenten (13') mit dem ersten Modul (11) herstellt.

10. Zentralsteuereinheit (10) nach Anspruch 9, **dadurch gekennzeichnet, dass** die Zentralsteuereinheit (10) eine mechanisch und elektrisch einheitliche Schnittstelle aufweist, bezüglich der jedes zweite Modul (12; 13) kompatibel ausgebildet ist.

11. Zentralsteuereinheit (10) nach einem der Ansprüche 9 oder 10, **dadurch gekennzeichnet, dass** das Gehäuse der Zentralsteuereinheit (10) mit einer Aufnahmeeinrichtung (14) zum Aufnehmen des zweiten Moduls (12; 13) ausgebildet ist.

12. Modul (12; 13) zur Verwendung in einer Zentralsteuereinheit (10), für ein System zur Steuerung von elektrisch ansteuerbaren Komponenten (1, 2, 3, 5, 6, 7; 12'; 13') in einem Kraftfahrzeug, in der mindestens ein weiteres Modul (11) zur Ansteuerung von Kraftfahrzeugkomponenten (1, 2, 3, 5, 6, 7) fest integriert ist und in das das Modul (12; 13) aufnehmbar ist, wobei das Modul (12; 13) zur Steuerung von Infotainmentkomponenten (12') oder zur Steuerung von Multimediakomponenten (13') ausgebildet ist, **dadurch gekennzeichnet dass** das zweite Modul als Multimediamodul (13) mit Firewall/Gateway-Funktion ausgebildet ist und mittels eines Multimediabusses (4) eine Verbindung der Multimediakomponenten (13') mit dem ersten Modul (11) herstellt.

## Claims

1. System for controlling electrically actuatable components (1, 2, 3, 5, 6, 7; 12'; 13') in a motor vehicle, having a central control unit (10) in which at least one first module (11) for actuating motor vehicle components (1, 2, 3, 5, 6, 7) is permanently integrated and which can receive at least one second module (12; 13), with the second module (12; 13) being designed to control infotainment components (12') and/or to control multimedia components (13'), **characterized in that** the second module (13) is in the form of a multimedia module (13) with a firewall/gateway function and **in that** the second module (13) uses a multimedia bus (4) to set up a connection between multimedia components (13') and the first module (11).

2. System according to Claim 1, **characterized in that** the central control unit (10) has a mechanically and electrically standard interface with which every second module (12; 13) is of compatible design.

3. System according to one of Claims 1 and 2, **characterized in that** the housing of the central control unit (10) is designed to have a receiving device (14) for receiving the second module (12; 13).

4. System according to one of the preceding claims, **characterized in that** the components (12') of the infotainment module (12) can be connected to the multimedia bus (4) as separate components (13') of the multimedia module (13).

5. System according to one of the preceding claims, **characterized in that** the infotainment module (12) has a car radio functionality and is provided for connecting audio components (12'), for example of a CD player, CD changer, MD player, DVD player or the like.

6. System according to one of the preceding claims, **characterized in that** the multimedia components (13') are in the form of a mobile telephone, navigation system, Internet connection, car radio or the like.

7. System according to one of the preceding claims, **characterized in that** the first module (11) in the central control unit (10) is arranged on a separate printed circuit board.

8. System according to one of the preceding claims, **characterized in that** the vehicle components (1, 2, 3, 5, 6, 7) are in the form of a combined instrument (1); operator control elements (2, 5); indicator devices (6); occupant protection applications (7), such as an airbag, ABS system, rollbar or the like; and/or in the form of control devices (3), such as a door lock, boot lock, fuel cap lock, glove compartment lock, window regulator, exterior mirror adjuster, seat adjuster, theft warning installation, rear screen heating, boot lighting, interior lighting or the like, and can be connected to the first module (11) in the central control unit (10) by means of appropriate buses (20, 21, 22, 23, 24).

9. Central control unit (10) for a system for controlling electrically actuatable components (1, 2, 3, 5, 6, 7; 12'; 13') in a motor vehicle, in which at least one first module (11) for actuating motor vehicle components (1, 2, 3, 5, 6, 7) is permanently integrated and which can receive at least one second module (12; 13), with the second module (12; 13) being designed to control infotainment components (12') or to control multimedia components (13'), **characterized in that** the second module (13) is in the form of a multimedia module (13) with a firewall/gateway function and uses a multimedia bus (4) to set up a connection between the multimedia components (13') and the first module (11).

10. Central control unit (10) according to Claim 9, **characterized in that** the central control unit (10) has a mechanically and electrically standard interface with which every second module (12; 13) is of compatible design.

11. Central control unit (10) according to one of Claims 9 and 10, **characterized in that** the housing of the central control unit (10) is designed to have a receiving device (14) for receiving the second module (12; 13).

12. Module (12; 13) for use in a central control unit (10) for a system for controlling electrically actuatable components (1, 2, 3, 5, 6, 7; 12'; 13') in a motor vehicle, in which at least one further module (11) for actuating motor vehicle components (1, 2, 3, 5, 6, 7) is permanently integrated and which can receive the module (12; 13), with the module (12; 13) being designed to control infotainment components (12') or to control multimedia components (13'), **characterized in that** the second module is in the form of a multimedia module (13) with a firewall/gateway function and uses a multimedia bus (4) to set up a connection between the multimedia components (13') and the first module (11).

## Revendications

1. Système pour commander des composants à commande électrique (1, 2, 3, 5, 6, 7 ; 12' ; 13') dans un véhicule automobile, comprenant une unité de commande centrale (10) dans laquelle est intégré à demeure au moins un premier module (11) destiné à commander des composants de véhicule automobile (1, 2, 3, 5, 6, 7) et dans laquelle peut être accueilli au moins un deuxième module (12 ; 13), le deuxième module (12 ; 13) étant configuré pour commander des composants d'info-spectacle (12') et/ou pour commander des composants multimédia (13'), **caractérisé en ce que** le deuxième module (13) est réalisé sous la forme d'un module multimédia (13) avec fonction pare-feu/passerelle et que le deuxième module (13) établit une liaison entre les composants multimédia (13') et le premier module (11) au moyen d'un bus multimédia (4).

2. Système selon la revendication 1, **caractérisé en ce que** l'unité de commande centrale (10) présente une interface mécaniquement et électriquement homogène avec laquelle chacun des deuxièmes modules (12 ; 13) présente une configuration compatible.

3. Système selon l'une des revendications 1 ou 2, **caractérisé en ce que** le boîtier de l'unité de commande centrale (10) est réalisé avec un dispositif d'accueil (14) destiné à recevoir le deuxième module (12 ; 13).

4. Système selon l'une des revendications précédentes, **caractérisé en ce que** les composants (12') du module d'info-spectacle (12) peuvent être raccordés au bus multimédia (4) en tant que composants autonomes (13') du module multimédia (13).

5. Système selon l'une des revendications précédentes, **caractérisé en ce que** le module d'info-spectacle (12) présente une fonctionnalité d'autoradio et il est prévu pour le raccordement de composants audio (12'), par exemple un lecteur de CD, un changeur de CD, un lecteur MP, un lecteur de DVD ou similaire.

6. Système selon l'une des revendications précédentes, **caractérisé en ce que** les composants multimédia (13') sont réalisés sous la forme d'un téléphone mobile, d'un système de navigation, d'une connexion Internet, d'un autoradio ou similaire.

7. Système selon l'une des revendications précédentes, **caractérisé en ce que** le premier module (11) dans l'unité de commande centrale (10) est disposé sur un circuit imprimé autonome.

8. Système selon l'une des revendications précédentes, **caractérisé en ce que** les composants de véhicule (1, 2, 3, 5, 6, 7) sont réalisés sous la forme d'un instrument combiné (1), d'éléments de commande (2, 5), de dispositifs d'affichage (6), de dispositifs de protection des passagers (7) comme, par exemple, un coussin gonflable de sécurité, un système ABS, un arceau de retournement ou similaire et/ou sous la forme de dispositifs de commande (3) comme, par exemple, un verrouillage de portière, un verrouillage de coffre, un verrouillage de bouchon de réservoir, un verrouillage de boîte à gants, un lève-vitre, un réglage de rétroviseur extérieur, un réglage de siège, une alarme antivol, un chauffage de lunette arrière, un éclairage de coffre, un éclairage de l'habitacle ou similaire et peuvent être raccordés au moyen de bus correspondants (20, 21, 22, 23, 24) au premier module (11) dans l'unité de commande centrale (10).

9. Unité de commande centrale (10) pour un système pour commander des composants à commande électrique (1, 2, 3, 5, 6, 7 ; 12' ; 13') dans un véhicule automobile, dans laquelle est intégré à demeure au moins un premier module (11) destiné à commander des composants de véhicule automobile (1, 2, 3, 5, 6, 7) et dans laquelle peut être accueilli au moins un deuxième module (12 ; 13), le deuxième module (12 ; 13) étant configuré pour commander des composants d'info-spectacle (12') ou pour commander des composants multimédia (13'), **caractérisée en ce que** le deuxième module (13) est réalisé sous la forme d'un module multimédia (13) avec fonction pare-feu/passerelle et que le deuxième module (13) établit une liaison entre les composants multimédia (13') et le premier module (11) au moyen d'un bus multimédia (4).

10. Unité de commande centrale (10) selon la revendication 9, **caractérisée en ce que** l'unité de commande centrale (10) présente une interface mécaniquement et électriquement homogène avec laquelle chacun des deuxièmes modules (12 ; 13) présente une configuration compatible.

11. Unité de commande centrale (10) selon l'une des revendications 9 ou 10, **caractérisée en ce que** le boîtier de l'unité de commande centrale (10) est réalisé avec un dispositif d'accueil (14) destiné à recevoir le deuxième module (12 ; 13).

12. Module (12 ; 13) destiné à être utilisé dans une unité de commande centrale (10) pour un système pour commander des composants à commande électrique (1, 2, 3, 5, 6, 7 ; 12' ; 13') dans un véhicule automobile, dans laquelle est intégré à demeure au moins un module supplémentaire (11) destiné à commander des composants de véhicule automobile (1, 2, 3, 5, 6, 7) et dans laquelle peut être accueilli le module (12 ; 13) en vue de commander des composants d'info-spectacle (12') ou de commander des composants multimédia (13'), **caractérisé en ce que** le deuxième module est réalisé sous la forme d'un module multimédia (13) avec fonction pare-feu/passerelle et établit une liaison entre les composants multimédia (13') et le premier module (11) au moyen d'un bus multimédia (4).
